Europäisches Patentamt

European Patent Office

Office européen des brevets

(19)

(11) Veröffentlichungsnummer : **0 362 550 B1**

# (12) EUROPÄISCHE PATENTSCHRIFT

(45) Veröffentlichungstag der Patentschrift :
**07.10.92 Patentblatt 92/41**

(51) Int. Cl.$^5$ : **F16B 13/12, F16B 13/08**

(21) Anmeldenummer : **89115914.7**

(22) Anmeldetag : **29.08.89**

(54) **Schlagspreizdübel für die Verankerung in konisch nach innen erweiterten Bohrlöchern.**

(30) Priorität : **05.10.88 DE 3833774**

(43) Veröffentlichungstag der Anmeldung :
**11.04.90 Patentblatt 90/15**

(45) Bekanntmachung des Hinweises auf die
Patenterteilung :
**07.10.92 Patentblatt 92/41**

(84) Benannte Vertragsstaaten :
**AT BE CH DE ES FR GB GR IT LI NL SE**

(56) Entgegenhaltungen :
**DE-A- 3 006 480**
**DE-A- 3 020 907**
**DE-A- 3 111 241**
**DE-A- 3 536 518**
**GB-A- 2 137 301**

(73) Patentinhaber : **fischerwerke Artur Fischer
GmbH & Co. KG
Weinhalde 14 - 18
W-7244 Waldachtal 3/Tumlingen (DE)**

(72) Erfinder : **Fischer, Artur, Prof. Dr. h.c.
Weinhalde 34
W-7244 Waldachtal 3/Tumlingen (DE)**
Erfinder : **Haage, Manfred, Dipl.-Ing.
Im Martinskirchle 22
W-7244 Waldachtal 3/Tumlingen (DE)**

(74) Vertreter : **Ott, Elmar, Dipl.-Ing.
fischerwerke Artur Fischer GmbH & Co KG
Weinhalde 14-18
W-7244 Waldachtal 3/Tumlingen (DE)**

**Beschreibung**

Die Erfindung betrifft einen Schlagspreizdübel gemäß der Gattung des Anspruches 1.

Aus der DE-OS 30 20 907 ist ein Schlagspreizdübel für die Verankerung in konisch nach innen erweiterten Bohrlöchern bekannt. Um eine erhöhte Aufspreizung für die Verankerung in der Hinterschneidung des Bohrloches zu erreichen, weist die der Schlagseite des Spreizstiftes gegenüberliegende Stirnseite eine Abrundung und die Verengung der Innenbohrung eine sehr starke Verjüngung auf. Durch das Aufsitzen der Stirnseite der Spreizhülse auf dem durch die Bohrerspitze eine Vertiefung aufweisenden Bohrlochgrund wird das Aufspreizen der Spreizsegmente erheblich behindert. Zur Verankerung ist daher eine hohe Einschlagenergie erforderlich, die wiederum entsprechende Spreizdruckkräfte freisetzt. Ferner ist es nicht oder nur schwer möglich, eine Aufspreizung der Spreizsegmente im Bereich der Hinterschneidung zu erreichen.

Aus der DE-OS 35 36 518 ist ein Schlagspreizdübel bekannt, an dessen aufspreizbarem Ende der Spreizhülse auf dem Bohrlochgrund aufsitzende Distanzelemente ausgebildet sind. Diese Distanzelemente dienen als Knickstege, die ein Ausknicken der Spreizsegmente in die Hinterschneidung eines Bohrloches ermöglichen. Aufgrund der fehlenden Abstützung dieser Spreizsegmente durch einen Spreizstift ergeben sich geringe Auszugskräfte des Schlagspreizdübels.

Der Erfindung liegt die Aufgabe zugrunde, einen Schlagspreizdübel für die Verankerung in konisch nach innen erweiterten Bohrlöchern zu schaffen, dessen Verspreizung im Bereich der konischen Erweiterung des Bohrloches bei geringer Einschlagenergie und hohen Haltewerten gewährleistet ist.

Die Lösung dieser Aufgabe wird bei einem Schlagspreizdübel der eingangs genannten Gattung durch die im kennzeichnenden Teil des Anspruches 1 angegebenen Merkmale erreicht. Die Erfindung sieht vor, daß das Distanzelement durch eine auf den Bohrlochgrund auftreffende Kunststoffdistanzscheibe gebildet wird, die mittels eines Aufnahmezapfens an der Stirnseite der Spreizsegmente in der von diesen umschlossenen Öffnung gehalten ist. Beim Einschlagvorgang sitzt die Kunststoffdistanzscheibe auf dem Bohrlochgrund auf, so daß die Stirnseite der Spreizhülse in einem Abstand zum Bohrlochgrund positioniert ist. Die Spreizsegmente können somit unbehindert aufspreizen und sich an die Wandung der Hinterschneidung zur Bildung einer formschlüssigen Verankerung anlegen. Über die Abstützung der Spreizsegmente mit dem eingetriebenen Spreizstift wird eine hohe Auszugskraft des Spreizdübels erreicht. Die Kunststoffdistanzscheibe bildet somit einen Puffer, der das Festsetzen der Spreizhülse am Bohrlochgrund verhindert.

In der an der Kunststoffdistanzscheibe angebrachten Einbuchtung findet eventuell noch vorhandenes Bohrmehl im Bohrlochgrund einen Bohrmehlstauraum.

Beim weiteren Eintreiben des Spreizstiftes in den Schlagspreizdübel wird der Aufnahmezapfen an der Sollbruchstelle durchgetrennt und ermöglicht so eine vollständige Durchdringung des Spreizstiftes durch die Spreizhülse.

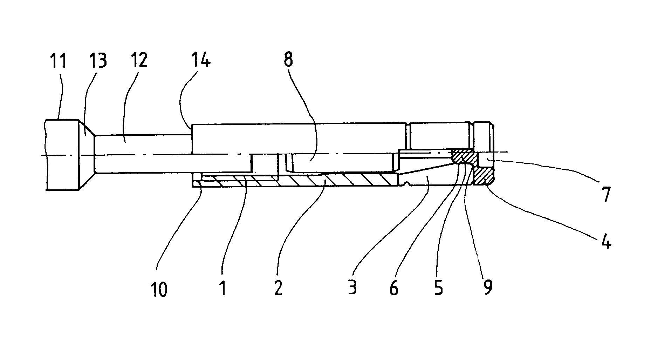

Die Erfindung wird nachfolgend anhand der Zeichnung näher erläutert. Diese zeigt in ihrer einzigen Figur einen erfindungsgemäßen Schlagspreizdübel, bei dem das Distanzelement durch eine Kunststoffdistanzscheibe gebildet ist.

Der dargestellte Schlagspreizdübel besteht aus einer eine Innenbohrung 1 aufweisenden Spreizhülse 2, an der Spreizsegmente 3 angebracht sind. Als Distanzelement ist am Schlagspreizdübel eine Kunststoffdistanzscheibe 4 angeordnet, die über einen Aufnahmezapfen 5 in der Öffnung 6 der Innenbohrung 1 gehalten ist. Die Kunststoffdistanzscheibe 4 weist eine Einbuchtung 7 auf, die zur Aufnahme noch vorhandenen Bohrmehls am Bohrlochgrund dient. Durch Einschlagen des Spreizstiftes 8 in die Spreizhülse 2 wird bei Auftreffen des Spreizstiftes 8 auf die Kunststoffdistanzscheibe 4 erreicht, daß deren Aufnahmezapfen 5 an der Sollbruchstelle 9 durchtrennt wird und so eine vollständige Durchdringung des Spreizstiftes durch die Spreizhülse 2 ermöglicht wird.

Der Schlagspreizdübel besitzt ferner an seinem den Spreizsegmenten 3 gegenüberliegenden Ende eine Durchmessererweiterung, die als Ringnut 10 ausgebildet ist. Ein Einschlagwerkzeug 11 mit einem Dorn 12 wird zum Eintreiben des Spreizstiftes 8 in die Innenbohrung 1 eingesetzt. Ist der Spreizstift 8 vollständig eingeschlagen, so kommt ein als Konus ausgebildeter Markierungskopf 13 mit dem Öffnungsrand 14 der Innenbohrung 1 zur Anlage.

Die Länge des Dorns 12 ist so bemessen, daß kurz bevor der Spreizstift 8 seine Endposition erreicht, der Konus 13 am Öffnungsrand 14 zur Anlage kommt. Durch weitere Hammerschläge auf das Einschlagwerkzeug 11 wird nun der Spreizstift 8 vollends in seine Endposition gebracht, wobei gleichzeitig der Öffnungsrand 14 geringfügig aufgeweitet wird. Diese Aufweitung ist nach dem Setzen des Schlagspreizdübels von außen deutlich ersichtlich und zeigt somit an, daß der Schlagspreizdübel fachgerecht durch Aufspreizung seiner Spreizsegmente im Bohrloch verankert ist. Der Markierungskopf 13 dient somit zur Markierung des formschlüssig im Bohrloch verankerten Schlagspreizdübels. Dadurch kann jederzeit kontrolliert werden, ob die in Bohrlöchern eingesetzten Schlagspreizdübel tatsächlich auch aufgespreizt und fachgerecht verankert sind.

Anstelle eines konischen Markierungskopfes 13 können auch Kerben, Vorsprünge oder dergleichen Markierungselemente verwendet werden, die im Bereich des Öffnungsrandes 14 eine entsprechende Markierung ermöglichen.

## Patentansprüche

1. Schlagspreizdübel für die Verankerung in konisch nach innen erweiterten Bohrlöchern, bestehend aus einer Spreizhülse mit Außen- und/oder Innengewinde und einem in die sich verengende Innenbohrung der Spreizhülse eintreibbaren Spreizstift, **dadurch gekennzeichnet,** daß am aufspreizbaren Ende der Spreizhülse ein Distanzelement angeordnet ist, das durch eine auf den Bohrlochgrund auftreffende Kunststoffdistanzscheibe (4) gebildet wird, die mittels eines Aufnahmezapfens (5) an der Stirnseite der Spreizsegmente (3) in der von diesen umschlossenen Öffnung (6) gehalten ist.

2. Schlagspreizdübel nach Anspruch 1, **dadurch gekennzeichnet,** daß die Kunststoffdistanzscheibe (4) eine stirnseitige Einbuchtung (7) aufweist.

3. Schlagspreizdübel nach Anspruch 2, **dadurch gekennzeichnet,** daß der Aufnahmezapfen (5) an einer Sollbruchstelle (9) durchtrennbar ist.

## Claims

1. An expansible plug for anchoring by impact in drilled holes widened conically inwards, consisting of an expansible sleeve with an internal and/or external thread and an expander bolt which is arranged to be driven into the narrowing internal bore of the expansible sleeve, characterized in that, at the expansible end of the expansible sleeve, there is arranged a spacer element which is formed by a plastics spacer disc (4) engaging the bottom of the drilled hole, which disc is held by means of a locating peg (5) at the end face of the expansible segments (3) in the opening (6) surrounded by these segments.

2. An expansible plug for anchoring by impact according to claim 1, characterized in that the plastics spacer disc (4) has an indentation (7) at its end face.

3. An expansible plug for anchoring by impact according to claim 2, characterized in that the locating peg (5) is arranged to be parted at a predetermined breaking point.

## Revendications

1. Cheville expansible par percussion pour ancrage dans un trou à chambrage évasé en cône vers l'intérieur, composée d'une douille expansible à filetage extérieur et/ou intérieur et d'un goujon dilatateur qui peut être repoussé dans l'alésage à section décroissante de cette douille, cheville caractérisée en ce qu'un élément d'espacement, disposé à l'extrémité expansible de la douille, est formé par une rondelle (4) en matière plastique, qui vient s'appliquer contre le fond du trou et qui est maintenue, au moyen d'une queue (5) de fixation, à l'extrémité antérieure des segments (3) extensibles, dans l'orifice (6) entouré par ces derniers.

2. Cheville expansible selon la revendication 1, caractérisée en ce que la rondelle (4) d'espacement comporte sur sa face antérieure un évidement (7).

3. Cheville expansible selon la revendication 2, caractérisée en ce que la queue (5) de fixation peut être sectionnée en un point ou endroit (9) prévu pour une rupture.